# EUROPÄISCHE PATENTSCHRIFT

(11) **EP 2 024 589 B1**
(45) Veröffentlichungstag und Bekanntmachung des Hinweises auf die Patenterteilung: **19.10.2011**
(21) Anmeldenummer: 07729021.1
(22) Anmeldetag: 11.05.2007
(51) Int. Cl.: E05B 65/20

(54) **GRIFFEINHEIT FÜR EINE BETÄTIGUNGSVORRICHTUNG**
GRIP UNIT FOR AN ACTUATING DEVICE
UNITÉ DE POIGNÉE POUR UN DISPOSITIF D'ACTIONNEMENT

(30) Priorität: 18.05.2006 DE 102006023634
(43) Veröffentlichungstag der Anmeldung: 18.02.2009
(60) Teilanmeldung: 10178790.1
(73) Patentinhaber: Huf Hülsbeck & Fürst GmbH & Co. KG, 42551 Velbert (DE)
(72) Erfinder: MÜLLER, Ralph, 42549 Velbert (DE)
(74) Vertreter: Vogel, Andreas
(86) Internationale Anmeldenummer: PCT/EP2007/054569
(87) Internationale Veröffentlichungsnummer: WO 2007/134985

(56) Entgegenhaltungen:
- EP-A- 1 149 966
- WO-A-01/16446
- WO-A-2005/038172
- WO-A-2005/038176
- DE-A1- 10 001 010
- DE-A1- 10 353 977
- DE-A1- 19 722 551
- DE-A1- 19 856 902
- LOSOTO A P ET AL: "CURRENT TRENDS IN THE DEVELOPMENT AND PRODUCTION OF MAGNETICALLY HARD MAGNETIC PLASTICS. GENERAL ASPECTS OF PRODUCTION TECHNOLOGY FOR MAGNETIC PLASTICS" INTERNATIONAL POLYMER SCIENCE AND TECHNOLOGY, RAPRA TECHNOLOGY, SHREWABURY, GB, Bd. 26, Nr. 9, 1999, Seiten T31-T39, XP000928567 ISSN: 0307-174X

## Beschreibung

Die Erfindung betrifft eine Griffeinheit für eine Betätigungsvorrichtung einer Fahrzeugtür, Klappe oder dergleichen, mit einem bewegbaren Griffelement, das mit einem ersten und einem zweiten Ende ausgeführt ist, die innenseitig an der Fahrzeugtür anordbar sind, wobei das Griffelement am ersten Ende an einem ersten feststehenden Element gelagert ist, einem zweiten feststehenden Element, das benachbart zum zweiten Ende des Griffelementes angeordnet ist, wobei während des Bewegens des Griffelementes die feststehenden Elemente mit dem Griffelement an Kontaktierungsflächen sich berühren. Des Weiteren bezieht sich die Erfindung auf ein Verfahren zur Herstellung der genannten Griffeinheit.

Dem Fachmann ist eine Vielzahl an Griffeinheiten mit einem bewegbaren Griffelement und einem feststehenden Element, das benachbart zum Griffelement angeordnet ist, bekannt. Während der Benutzer am Griffelement zieht und dieses somit aus der Tür bewegt, hat es sich nachteiligerweise gezeigt, dass ungewollte Geräuschentwicklungen entstehen.

Das Griffelement sowie das feststehende Element sind in der Regel aus einem verstärkten Kunststoff hergestellt, wobei während des Bewegens des Griffelementes das feststehende Element mit dem Griffelement sich an Kontaktierungstlächen berühren und somit aufgrund der Gleitreibung Geräusche entstehen können.

Ein weiterer Nachteil ist, dass bekannte Griffelemente ein gewisses Spiel innerhalb der Griffeinheit aufweisen, welches mit einer Kippneigung des Griffelementes verbunden ist.

Aus der DE-A-10001010 ist eine Griffeinheit bekannt mit einer zum Teil eingefärbten Fläche aus Kunststoff. Die Festigkeit dieser eingeförbten Schicht ist nur geringfügig kleiner wie die des ungefärbten Kunststoffmaterials und eignet sich nich zur Geräuschreduzierung beim Einsatz als Gleitstück.

Es ist Aufgabe der vorliegenden Erfindung eine Griffeinheit sowie ein Verfahren zur Herstellung der Griffeinheit für eine Betätigungsvorrichtung einer Fahrzeugtür, Klappe oder dergleichen zu schaffen, bei denen die genannten Nachteile vermieden werden, insbesondere eine Griffeinheit bereitgestellt wird, die einfach gestaltet ist, ohne erheblichen Aufwand hergestellt werden kann und dem Benutzer auf komfortable und sichere Weise eine nahezu geräuschlose Betätigung der Griffeinheit ermöglicht.

Zur Lösung dieser Aufgabe wird eine Griffeinheit mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die Griffeinheit einen ersten Kunststoff aufweist und mit zumindest einer Kontaktierungsfläche aus einem zweiten Kunststoff ausgestaltet ist, der eine geringere Festigkeit aufweist als der erste Kunststoff, wobei diese Kontaktierungsfläche mit dem jeweiligen Element der Griffeinheit einstückig verbunden ist. Der zweite Kunststoff kann beispielsweise aus einem unverstärkten Kunststoff ausgeführt sein. Unter der Bezeichnung erster und/oder zweiter Kunststoff ist ebenfalls mit umfasst, dass der erste und/oder der zweite Kunststoff ein Verbund oder eine Mischung aus zumindest zwei verschiedenen Einzelkunststoffen sein kann.

Während der Benutzer das Griffelement betätigt, gleiten die Kontaktierungsflächen aneinander ab, wobei zumindest eine Kontaktierungsfläche aus dem eine geringe Festigkeit aufweisenden zweiten Kunststoff ausgeführt ist. Durch den Einsatz des zweiten "weicheren" Kunststoffes hat sich gezeigt, dass die Geräuschentwicklung wesentlich reduziert werden kann. Der erste eine größere Festigkeit aufweisende Kunststoff kann Glasfasern und/oder Kohlenstofffasern und/oder Aramidfasern aufweisen. Der erste Kunststoff kann zum Beispiel ein Polyamid (PA), ein Polyoxymethylen (POM), ein Acryl-Butadien-Styrol (ABS) oder ein PBT sein, die jeweils einen bestimmten Glasfaseranteil aufweisen. Das Griffelement und die feststehenden Elemente sind somit aus dem ersten eine größere Festigkeit aufweisenden Kunststoff ausgeführt, wobei selbstverständlich das Griffelement sowie die feststehenden Element sich in ihrem Material unterscheiden können. Das Wesentliche dieser Erfindung ist, dass zumindest eine Kontaktierungsfläche aus dem zweiten Kunststoff hergestellt ist, der vorzugsweise am jeweiligen Element der Griffeinheit angespritzt ist, wodurch eine einstückige Verbindung der Kontaktierungsfläche, die in dieser Erfindung auch als Gleitstück wirkt, mit dem Griffelement und/oder den feststehenden Elementen erzielt wird. Das erste und das zweite feststehende Element sind vorzugsweise an einem Träger angeordnet, der innenseitig der Fahrzeugtür befestigt ist.

Vorteilhafterweise sind die Kontaktierungsflächen sowohl am Griffelement als auch an den feststehenden Elementen aus dem zweiten Kunststoff ausgeführt. In einer bevorzugten Ausführungsform der Griffeinheit ist die Kontaktierungsfläche an der dem feststehenden Element zugewandten Seite des zweiten Endes des Griffelementes angeordnet. Alternativ und/oder zusätzlich ist die aus dem zweiten Kunststoff ausgestaltete Kontaktierungsfläche an der dem Griffelement zugewandten Seite des feststehenden Elementes positioniert. Hierbei kann der zweite Kunststoff ein Material aus POM, PBT, PA oder ABS sein. Ebenfalls ist es denkbar, das der zweite Kunststoff ein Material aus PBT/PC und/oder aus ABS/PC oder eine Mischung aus den genannten Materialien ist.

Vorteilhafterweise sind die Kontaktierungsflächen am Griffelement sowie an den feststehenden Elementen durch ein Mehrkomponenten-Spritzgussverfahren angeordnet. Beispielsweise kann ein 2K-Spritzgussverfahren zum Einsatz kommen, bei dem nach dem Erstarren des ersten Kunststoffes der zweite Kunststoff mit einem Spritzaggregat angespritzt wird, wodurch zwei unterschiedliche Kunststoffe mit unterschiedlichen Eigenschaften in ihrer Festigkeit, elektrischer Leitfähigkeit etc. formschlüssig und/oder stoffschlüssig miteinander verbunden werden können.

In einer alternativen Ausführungsform der Griffeinheit können die Kontaktierungsflächen des bewegbaren Griffelementes aus einem zweiten Kunststoff ausgeführt sein, der materialunterschiedlich zur Kontaktierungsfläche des feststehenden Elementes ist. Das bedeutet, dass zum Beispiel die jeweilige Kontaktierungsfläche des Griffelementes aus POM und die Kontaktierungsfläche des feststehenden Elementes aus ABS bestehen kann.

In einer alternativen Ausführungsform ist es denkbar, die Kontaktierungsfläche vorsprungartig am jeweiligen Element der Griffeinheit anzuordnen. Während der Bewegung des Griffelementes berühren sich die Kontaktierungsflächen zu jeder Zeit. Ebenfalls ist es denkbar, dass kurzzeitig das Griffelement das erste und das zweite feststehende Element an den genannten Kontaktierungsflächen berührt.

Eine verbessernde Maßnahme sieht vor, dass mindestens zwei Kontaktierungsflächen am Griffelement, insbesondere am zweiten Ende sowie am zugehörigen zweiten feststehenden Element angeordnet sind, wobei die Kontaktierungsflächen des jeweiligen Elementes zueinander beabstandet sind. Hierdurch kann eine gute Führung des Griffelementes während seiner Bewegung entlang der Kontaktierungsfläche des feststehenden Elementes erreicht werden. Ebenfalls vorteilhaft kann sein, dass das erste und/oder das zweite Ende des Griffelementes und/oder die feststehenden Elemente der Griffeinheit vollständig oder zumindest teilweise durch den zweiten Kunststoff umgeben sind.

Vorteilhafterweise ist die Kontaktierungsfläche mit einer leicht gewölbten Oberfläche ausgeführt, wodurch eine geräuschlose Betätigung des Griffelementes begünstigt wird.

In einer weiteren Alternative der Erfindung weist die Griffeinheit einen ersten Trägerbereich auf, an dem die Kontaktierungsfläche angespritzt ist. Hierbei kann der erste Trägerbereich sowohl am bewegbaren Griffelement als auch an den feststehenden Elementen angeordnet sein. Dieser Trägerbereich ist vorzugsweise einstückig und materialeinheitlich mit dem Griffelement bzw. mit dem feststehenden Element verbunden. Besonders vorteilhaft ist, dass die zuverlässige Befestigung der Kontaktierungsfläche an der Griffeinheit durch eine entsprechende konstruktive Ausgestaltung des Trägerbereiches unterstützt werden kann.

In einer möglichen Alternative weist die Griffeinheit einen zweiten Trägerbereich auf.

Zweckmäßigerweise ist der zweite Trägerbereich durch eine Kunststoffschicht vollständig bedeckt. In einer Ausführungsform ist der zweite Trägerbereich mit einer Vertiefung ausgebildet.

Vorteilhafterweise weist der erste und/oder der zweite Trägerbereich vorsprungsartige Rippen und/oder Vertiefungen auf, die eine zuverlässige Befestigung der Kontaktierungsflächen bewirken.

Die genannte Aufgabe wird des Weiteren durch ein Verfahren gemäß des unabhängigen Anspruches 14 gelöst, wobei es die Schritte aufweist, dass zunächst das Griffelement und die feststehenden Elemente aus einem ersten Kunststoff hergestellt werden und anschließend zumindest eine Kontaktierungsfläche aus einem zweiten Kunststoff, der eine geringere Festigkeit als der erste Kunststoff aufweist, an definierten Bereichen der Griffeinheit angespritzt wird. Der Grundkörper des Griffelementes sowie des feststehenden Elementes wird in der Regel durch ein Spritzgussverfahren hergestellt. Die Grundkörper können bereits an definierten Stellen Trägerbereiche aufweisen, an die im nächsten Schritt die Kontaktierungsfläche aus dem zweiten Kunststoff angespritzt wird. In den abhängigen Ansprüchen sind bevorzugte Ausführungsformen ausgeführt.

In einer möglichen Ausführungsform der Erfindung wird das erste Ende vollständig durch den zweiten Kunststoff umspritzt. Ferner wird der zweite Kunststoff an der dem ersten feststehenden Element zugewandten Seite des zweiten Endes und an Trägerbereichen des ersten feststehenden Elementes angespritzt.

Vorteilhafterweise wird während und/oder nach dem Schritt b) des Anspruches 20 an einem zweiten Trägerbereich der Griffeinheit eine Kunststoffschicht angespritzt.

In einer vorteilhaften Ausführungsform des Verfahrens ist die Kunststoffschicht aus einem spritzfähigen Kunststoff gebildet.

Besonders vorteilhaft ist, dass der zweite Kunststoff durch ein Mehrkomponenten-Spritzgussverfahren an die Griffeinheit, insbesondere an das bewegbare Griffelement und an die feststehenden Elemente angespritzt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Es zeigen:
- Figur 1: eine erfindungsgemäße Griffeinheit mit einem bewegbaren Griffelement sowie einem feststehenden Element,
- Figur 2: eine rein schematische Darstellung einer möglichen Griffeinheit in Draufsicht,
- Figur 3: eine Ansicht auf das feststehende Element gemäß II-II aus Figur 2,
- Figur 4: eine Schnittansicht am ersten Trägerbereich gemäß Schnittlinie III - III aus Figur 3 und
- Figur 5: eine dreidimensionale Seitenansicht auf ein bewegbares Griffelement mit Kontaktierungsflächen.

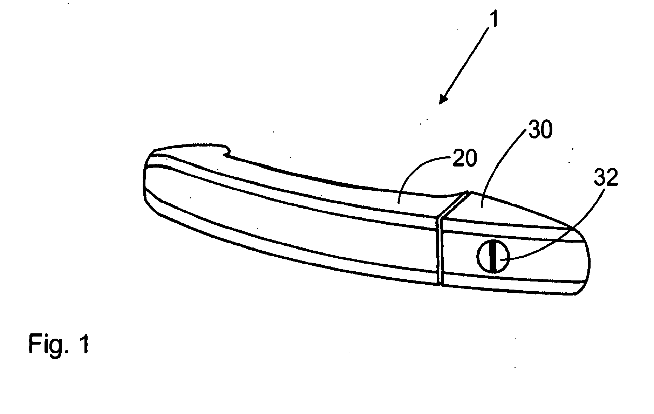

In Figur 1 ist eine mögliche Ausführungsform einer Griffeinheit 1 für eine Betätigungsvorrichtung einer Fahrzeugtür 2 dargestellt, wobei die Griffeinheit 1 ein bewegbares Griffelement 20, ein erstes feststehendes Element 24 und ein zweites feststehendes Element 30 aufweist. Wie in dieser Darstellung zu erkennen ist, ist im feststehenden Element 30 ein Zylinderschloss 32 zum manuellen Schließen und Öffnen des Türschlosses angeordnet. Die Elemente 24,30 sind an einem nicht dargestellten Träger angeordnet, der innenseitig der Tür 2 befestigt ist.

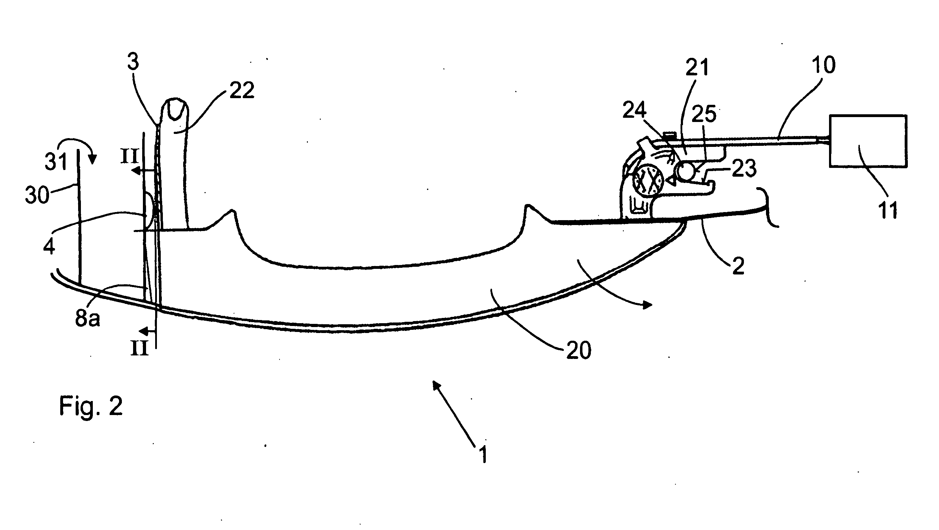

In Figur 2 ist eine Draufsicht auf die Griffeinheit 1 gezeigt, wobei das zweite feststehende Element 30 rein schematisch dargestellt ist. Das zweite feststehende Element 30 ist mit einem Zylinderturm 31 ausgeführt, in dem das Zylinderschloss 32 angeordnet werden kann. In weiteren möglichen Ausführungsformen der Griffeinheit 1 kann der Zylinderturm 31 ohne jegliche Elemente leer bleiben.

Das bewegbare Griffelement 20 ist mit einem ersten 21 und einem zweiten Ende 22 ausgeführt, die innenseitig an der Fahrzeugtür 2 sich befinden. Das Griffelement 20 ist am ersten Ende 21 um eine Drehachse, die das feststehende Element 24 aufweist, drehbar gelagert. Ferner ist das Griffelement 20 mit einem nicht dargestellten Hohlraum ausgeführt, in dem eine Elektronikeinheit sich befindet. Die Verbindung von der genannten Elektronikeinheit zur fahrzeugseitigen Elektronik wird durch die elektrische Leitung 10 sowie den schematisch dargestellten Stecker 11 erreicht.

Das bewegbare Griffelement 20 mit seinem ersten und seinem zweiten Ende 21,22 sowie das feststehende Element 30 sind Spritzgussteile aus einem ersten Kunststoff. Am zweiten Ende 22 des Griffelementes 20 sind Kontaktierungsflächen 3 aus einem zweiten Kunststoff angeordnet. Das benachbart zum Griffelement 20 erste feststehende Element 30 weist ebenfalls eine Kontaktierungsfläche 4 auf. Des Weiteren ist das erste Ende 21 haken- beziehungsweise gabelförmig mit zwei Schenkeln ausgeführt, die innenseitig die Drehachse 24 kontaktieren. Das erste Ende 21 ist mit dem zweiten "weicheren" Kunststoff umspritzt, so dass die Innenseiten der Schenkel Kontaktierungsflächen 23 für die Drehachse 24 bilden, die ebenfalls eine aus dem zweiten Kunststoff bestehende Kontaktierungsfläche 25 umfangsseitig aufweist.

Die genannten Kontaktierungsflächen 3,4,23,25 sind aus einem zweiten Kunststoff ausgestaltet, der eine geringere Festigkeit als der erste Kunststoff aufweist. Erfindungsgemäß sind die Kontaktierungsflächen 3,4,23,25 durch ein Mehrkomponenten-Spritzgussverfahren an dem jeweiligen Element 21,22,24,30 angespritzt. Selbstverständlich können sich die Kontaktierungsflächen 3,4,23,25 hinsichtlich des Materials voneinander unterscheiden. Ebenfalls ist es denkbar, dass der zweite Kunststoff eine Mischung aus mehreren Einzelkunststoffen ist.

In Ruheposition des Griffelementes 20 berührt die eine gewölbte Oberfläche aufweisende Kontaktierungsfläche 4 den unteren Bereich der Kontaktierungsfläche 3. Während der Benutzer am Griffelement 20 zieht, schwenkt dieses um seine Drehachse 24 gegen den Uhrzeigersinn, wobei die Kontaktierungsfläche 3 des Griffelementes 20 entlang der feststehenden Kontaktierungsfläche 4 gleitet. Gleichzeitig gleitet die Kontaktierungsfläche 23 and der Kontaktierungsfläche 25 der Drehachse 24 ab. Da die Kontaktierungsflächen 3,4,23,25 aus einem entsprechenden weicheren zweiten Kunststoff bestehen, unterliegen die sich berührenden Teile der Griffeinheit 1 einem sehr geringen Verschleiß. Durch den Einsatz der genannten Kontaktierungsflächen 3,4,23,25 wird zusätzlich eine entsprechende Kippsicherheit des beweglichen Griffelementes 20 erzielt. In einer weiteren nicht dargestellten Alternative besteht ebenfalls die Möglichkeit lediglich ein Element 21,22,24.30. der Griffeinheit 1 mit einer aus dem zweiten Kunststoff ausgebildeten Kontaktierungsfläche 3,4,23,25 zu versehen.

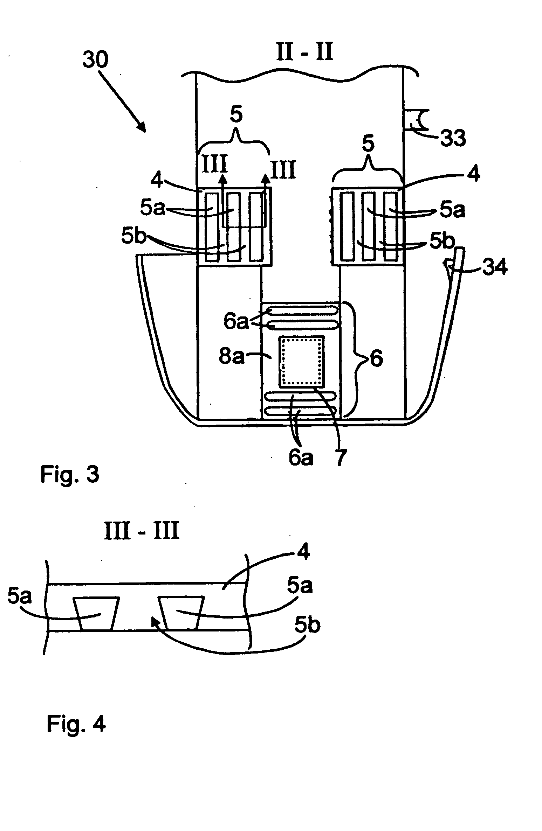

Wie Figur 2 zeigt, ist eine Kunststoffschicht 8a am feststehenden Element 30 angeordnet. Wie die Kontaktierungsflächen 3,4,23,25 ist auch die Kunststoffschicht 8a durch ein Mehrkomponenten-Spritzgussverfahren an der Griffeinheit 1 angespritzt. Damit eine zuverlässige Befestigung der Kontaktierungsflächen 3,4 sowie der Kunststoffschicht 8a am jeweiligen Element 20,30 erzielbar ist, sind erste Trägerbereiche 5 vorgesehen, die in Figur 3 dargestellt sind. An diese Trägerbereiche 5 werden zwei Kontaktierungsflächen 4 angespritzt. Die Trägerbereiche 5 sind durch vorsprungartige Rippen 5a gebildet, die jeweils einen bestimmten Abstand zueinander aufweisen. Des Weiteren weist das feststehende Element 30 einen zweiten Trägebereich 6 auf, der eine Vertiefung 7 aufweist. Zudem ist der zweite Trägerbereich 6 mit streifenförmigen Vertiefungen 6a ausgebildet. Im angespritzten Zustand der Kunststoffschicht 8a sind diese Vertiefungen 6a vollständig durch das Material der Kunststoffschicht 8a ausgefüllt. Ferner weist das feststehende Element 30 Befestigungselemente 33 sowie Arretierungsmittel 34 für einen zuverlässigen Halt an der Fahrzeugtür 2 auf.

In Figur 4 ist eine mögliche Ausgestaltung der Rippen 5a gezeigt, deren Rippenbreiten zum freien Ende der jeweiligen Rippe 5a leicht zunimmt. Nachdem die Kontaktierungsfläche 4 am ersten Trägerbereich 5 aufgespritzt ist, sind die Rippen 5a mit dem zweiten Kunststoff bedeckt, wobei die Nuten 5b zwischen den Rippen 5a vollständig mit dem zweiten Kunststoff ausgefüllt sind. Die in Figur 4 dargestellte Form der Rippen 5a begünstigt eine formschlüssige Verbindung der Kontaktierungsfläche 4 am feststehenden Element 30. Selbstverständlich sind alternative Ausgestaltungen der Rippen 5a denkbar. Beispielsweise können anstelle von Rippen 5a Vertiefungen - entsprechend des zweiten Trägerbereiches 6 - zum Einsatz kommen.

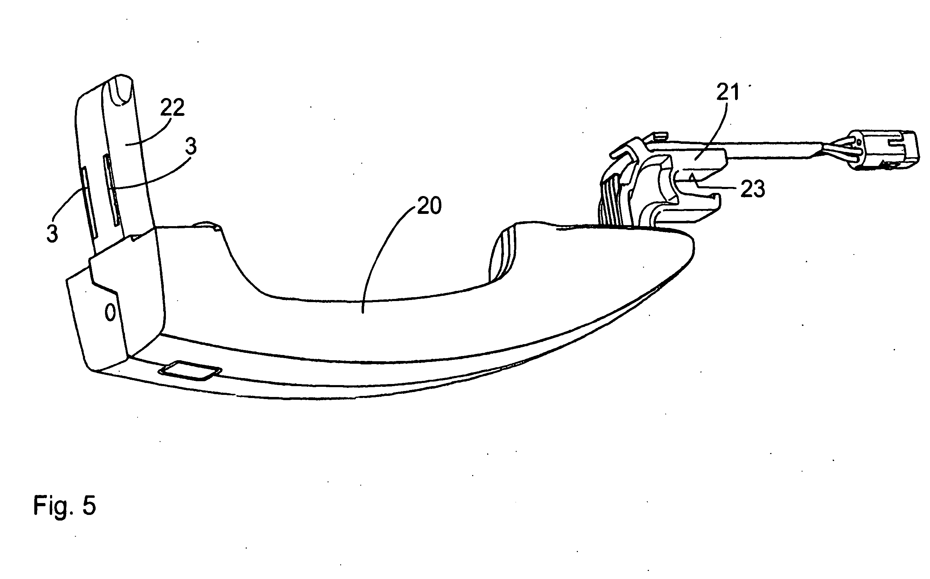

Figur 5 zeigt exemplarisch Kontaktierungsflächen 3 des Griffelementes 20, die am zweiten Ende 22 des Griffelementes 20 angeordnet sind. Bei dieser Ausführungsform sind die Kontaktierungsflächen 3 streifenförmig in einem Abstand zueinander ausgebildet. Wie beim ersten feststehenden Element 30 kann in einer alternativen, nicht dargestellten Ausführungsform der Erfindung die Drehachse 24 und das Griffelement 20 am ersten 21 und am zweiten Ende 22 entsprechend ausgebildete Trägerbereiche aufweisen, an denen die Kontaktierungsflächen 3,23,25 angespritzt sind.

Die Griffeinheit 1 wird derart hergestellt, dass zunächst das bewegbare Griffelement 20 sowie die feststehenden Elemente 24,30 aus dem eine höhere Festigkeit aufweisenden ersten Kunststoff gespritzt werden. Beispielsweise kann der erste Kunststoff einen bestimmten Anteil an Glasfasern aufweisen, der je nach Festigkeitsanforderung variiert werden kann. Das aus dem ersten Kunststoff hergestellte Griffelement 20 sowie die feststehenden Elemente 24,30 stellen den Grundkörper der Griffeinheit 1 dar. Das erste feststehende Element 30 ist bereits mit den Trägerbereichen 5,6 ausgeführt.

Im darauf folgenden zweiten Schritt werden die Kontaktierungsflächen 3,4,23,25 aus dem zweiten Kunststoff an definierten Bereichen des Griffelementes 20 und der feststehenden Elemente 24,30 angespritzt. Im vorliegenden Ausführungsbeispiel ist das erste Ende 21 des Griffelementes 20 sowie die Drehachse 24 vollständig durch den zweiten Kunststoff umgeben, durch den die Kontaktierungsflächen 23,25 gebildet sind. Hingegen sind die Kontaktierungsflächen 3 lediglich an der dem feststehenden Element 30 zugewandten Seite des zweiten Endes 22 an definierten Bereichen angespritzt, wobei die Kontaktierungsflächen 3 streifenförmig sind und einen Abstand zueinander aufweisen. Zudem sind die Kontaktierungsflächen 4 des feststehenden Elementes 30 ebenfalls an definierten Bereichen, hier an den Trägerbereichen 5 angeordnet.

Während und/oder nach dem zweiten Schritt kann an dem zweiten Trägerbereich 6 der Griffeinheit 1 die Kunststoffschicht 8a angespritzt werden.

Die Kunststoffschicht 8a kann aus demselben zweiten Kunststoff bestehen wie die Kontaktierungsfläche 4. Ebenfalls kann die Kunststoffschicht 8a als Gleitfläche dienen, an der die Kontaktierungsfläche 3 des Griffelementes 20 entlang gleiten kann.

### Bezugszeichenliste

- 1: Griffeinheit
- 2: Fahrzeugtür
- 3: Kontaktierungsfläche
- 4: Kontaktierungsfläche
- 5: erster Trägerbereich
- 5a: Rippen
- 5b: Nuten
- 6: zweiter Trägerbereich
- 6a: Vertiefungen
- 7: Vertiefung
- 8a: Kunststoffschicht

- 10: elektrische Leitung
- 11: Stecker
- 20: bewegbares Griffelement
- 21: erstes Ende des Griffelementes
- 22: zweites Ende des Griffelementes
- 23: Kontaktierungsfläche
- 24: erstes feststehendes Element
- 25: Kontaktierungsfläche
- 30: zweites feststehendes Element
- 31: Zylinderturm
- 32: Zylinderschloss
- 33: Befestigungselement
- 34: Arretierungsmittel

## Patentansprüche

1. Griffeinheit (1) für eine Betätigungsvorrichtung einer Fahrzeugtür (2), Klappe oder dergleichen, mit
einem bewegbaren Griffelement (20), das mit einem ersten (21) und einem zweiten Ende (22) ausgeführt ist, die innenseitig an der Fahrzeugtür (2) anordbar sind, wobei das Griffelement (20) am ersten Ende (21) an einem ersten feststehenden Element (24) gelagert ist,
einem zweiten feststehenden Element (30), das benachbart zum zweiten Ende (22) des Griffelementes (20) angeordnet ist,
wobei während des Bewegens des Griffelementes (20) die feststehenden Elemente (24,30) mit dem Griffelement (20) an Kontaktierungsflächen (3,4,23,25) sich berühren,
**dadurch gekennzeichnet,**
**dass** die Griffeinheit (1) einen ersten Kunststoff aufweist und mit zumindest einer Kontaktierungsfläche (3,4,23,25) aus einem zweiten Kunststoff ausgestaltet ist, der eine geringere Festigkeit aufweist als der erste Kunststoff, wobei diese Kontaktierungsfläche (3,4,23,25) mit dem jeweiligen Element (24,20,30) der Griffeinheit (1) einstückig verbunden ist und als Gleitstück wirkt, so dass eine Geräuschentwicklung wesentlich reduzierbar ist.

2. Griffeinheit (1) nach Anspruch 1,
**dadurch gekennzeichnet,**
**dass** die Kontaktierungsfläche (3,4,23,25) durch ein Mehrkomponenten-Spritzgussverfahren mit der Griffeinheit (1) verbunden ist.

3. Griffeinheit (1) nach Anspruch 1 oder 2,
**dadurch gekennzeichnet,**
**dass** die Kontaktierungsfläche (3) an der dem feststehenden Element (30) zugewandten Seite des zweiten Endes (22) des Griffelementes (20) angeordnet ist.

4. Griffeinheit (1) nach einem der vorhergehenden Ansprüche,
**dadurch gekennzeichnet,**
**dass** die Kontaktierungsfläche (4) an der dem Griffelement (20) zugewandten Seite des feststehenden Elementes (30) angeordnet ist.

5. Griffeinheit (1) nach einem der vorhergehenden Ansprüche,
**dadurch gekennzeichnet,**
**dass** die Kontaktierungsfläche (23) am ersten Ende (21) des Griffelementes (20) angeordnet ist.

6. Griffeinheit (1) nach einem der vorhergehenden Ansprüche,
**dadurch gekennzeichnet,**
**dass** der erste und/oder der zweite Kunststoff ein Verbund aus zumindest zwei Einzelkunststoffen ist.

7. Griffeinheit (1) nach einem der vorhergehenden Ansprüche,
**dadurch gekennzeichnet,**
**dass** der erste Kunststoff Glasfasern und/oder Kohlenstofffasern und/oder Aramidfasern aufweist, wobei insbesondere der zweite Kunststoff ein Material aus POM, PBT, PA, ABS oder aus PBT/PC und/oder aus ABS/PC ist.

8. Griffeinheit (1) nach einem der vorhergehenden Ansprüche,
**dadurch gekennzeichnet,**
**dass** die Kontaktierungsfläche (3,4) vorsprungsartig am jeweiligen Element (20,30) angeordnet ist.

9. Griffeinheit (1) nach einem der vorhergehenden Ansprüche,
**dadurch gekennzeichnet,**
**dass** mindestens zwei Kontaktierungsflächen (3,4) am zweiten Ende (22) des Griffelementes (20) sowie am feststehenden Element (30) angeordnet sind, wobei die Kontaktierungsflächen (3,4) des jeweiligen Elementes (20,30) zueinander beabstandet sind.

10. Griffeinheit (1) nach einem der vorhergehenden Ansprüche,
**dadurch gekennzeichnet,**
**dass** das erste (21) und/oder das zweite Ende (22) vollständig durch den zweiten Kunststoff umgeben sind.

11. Griffeinheit (1) nach einem der vorhergehenden Ansprüche,
**dadurch gekennzeichnet,**
**dass** die Kontaktierungsfläche (3,4,23,25) eine gewölbte Oberfläche aufweist.

12. Griffeinheit (1) nach einem der vorhergehenden Ansprüche,
**dadurch gekennzeichnet,**
**dass** die Griffeinheit (1) einen ersten Trägerbereich (5) aufweist, an dem die Kontaktierungsfläche (4) angespritzt ist.

13. Griffeinheit (1) nach einem der vorhergehenden Ansprüche,
**dadurch gekennzeichnet,**
**dass** der Trägerbereich (5,6) durch vorsprungsartige ausgeführte Rippen (5a) und/oder Vertiefungen (6a) gebildet ist.

14. Verfahren zur Herstellung einer Griffeinheit (1) für eine Betätigungsvorrichtung einer Fahrzeugtür (2), Klappe oder dergleichen, mit
einem bewegbaren Griffelement (20), das mit einem ersten (21) und einem zweiten Ende (22) ausgeführt ist, die innenseitig an der Fahrzeugtür (2) anordbar sind, wobei das Griffelement (20) am ersten Ende (21) an einem ersten feststehenden Element (24) gelagert ist,
einem zweiten feststehenden Element (30), das benachbart zum zweiten Ende (22) des Griffelementes (20) angeordnet ist,
wobei während des Bewegens des Griffelementes (20) die feststehenden Elemente (24,30) mit dem Griffelement (20) an Kontaktierungsflächen (3,4,23,25) sich berühren, **gekennzeichnet durch** folgende Schritte:
a) das Griffelement (20) und die feststehenden Elemente (24,30) werden aus einem ersten Kunststoff hergestellt,
b) zumindest eine Kontaktierungsfläche (3,4,23,25) wird aus einem zweiten Kunststoff, der eine geringere Festigkeit aufweist als der erste Kunststoff, an einem definierten Bereich der Griffeinheit (1) angespritzt, wodurch Geräusche, die während des Bewegens des Griffelementes entstehen, vermieden werden.

15. Verfahren nach Anspruch 14,
**dadurch gekennzeichnet,**
**dass** gemäß Schritt b)
(1) das erste Ende (21) vollständig durch den zweiten Kunststoff umspritzt wird,
(2) an der dem ersten feststehenden Element (30) zugewandten Seite des zweiten Endes (22) der zweite Kunststoff angespritzt wird,
(3) an Trägerbereichen (5) des ersten feststehenden Elementes (30) der zweite Kunststoff angespritzt wird.

16. Verfahren nach einem der vorhergehenden Ansprüche,
**dadurch gekennzeichnet,**
**dass** der zweite Kunststoff durch ein Mehrkomponenten-Spritzgussverfahren an die Griffeinheit (1) angespritzt wird.

17. Verfahren nach einem der Ansprüche 14 bis 16 zur Herstellung einer Griffeinheit (1) nach einem der Ansprüche 1 bis 13.

## Claims

1. A handle unit (1) for an actuating apparatus of a vehicle door (2), a flap or the like, with
a movable handle element (20) which is constructed with a first end (21) and a second end (22) which are capable of being arranged on the inside of the vehicle door (2), wherein the handle element (20) is mounted at the first end (21) on a first stationary element (24),
a second stationary element (30) which is arranged adjacent to the second end (22) of the handle element (20),
wherein the stationary elements (24, 30) contact the handle element (20) on contacting faces (3, 4, 23, 25) during the movement of the handle element (20),
**characterized in that**
the handle unit (1) has a first plastics material and is constructed with at least one contacting face (3, 4, 23, 25) of a second plastics material which has a lower strength than the first plastics material, wherein this contacting face (3, 4, 23, 25) is joined in one piece to the respective element (24, 20, 30) of the handle unit (1) and acts as a sliding member, so that the generation of noise is capable of being substantially reduced.

2. A handle unit (1) according to Claim 1, **characterized in that** the contacting face (3, 4, 23, 25) is joined to the handle unit (1) by a multiple-component injection-moulding method.

3. A handle unit (1) according to Claim 1 or 2, **characterized in that** the contacting face (3) is arranged on the side of the second end (22) of the handle element (20) facing the stationary element (30).

4. A handle unit (1) according to any one of the preceding Claims, **characterized in that** the contacting face (4) is arranged on the side of the stationary element (30) facing the handle element (20).

5. A handle unit (1) according to any one of the preceding Claims, **characterized in that** the contacting face (23) is arranged on the first end (21) of the handle element (20).

6. A handle unit (1) according to any one of the preceding Claims, **characterized in that** the first and/or the second plastics material is a composite of at least two individual plastics materials.

7. A handle unit (1) according to any one of the preceding Claims, **characterized in that** the first plastics material has glass fibres and/or carbon fibres and/or aramide fibres, wherein in particular the second plastics material is a material of POM, PBT, PA, ABS or of PBT / PC and/or of ABS / PC.

8. A handle unit (1) according to any one of the preceding Claims, **characterized in that** the contacting face (3, 4) is arranged in the manner of a projection on the respective element (20, 30).

9. A handle unit (1) according to any one of the preceding Claims, **characterized in that** at least two contacting faces (3, 4) are arranged on the second end (22) of the handle element (20) as well as on the stationary element (30), wherein the contacting faces (3, 4) of the respective element (20, 30) are arranged at a distance from each other.

10. A handle unit (1) according to any one of the preceding Claims, **characterized in that** the first end (21) and/or the second end (22) are completely surrounded by the second plastics material.

11. A handle unit (1) according to any one of the preceding Claims, **characterized in that** the contacting face (3, 4, 23, 25) has a convex surface.

12. A handle unit (1) according to any one of the preceding Claims, **characterized in that** the handle unit (1) has a first support region (5) onto which the contacting face (4) is injection-moulded.

13. A handle unit (1) according to any one of the preceding Claims, **characterized in that** the support region (5, 6) is formed by ribs (5a) designed in the manner of projections and/or by depressions (6a).

14. A method of producing a handle unit (1) for an actuating apparatus of a vehicle door (2), a flap or the like, with
a movable handle element (20) which is constructed with a first end (21) and a second end (22) which are capable of being arranged on the inside of the vehicle door (2), wherein the handle element (20) is mounted at the first end (21) on a first stationary element (24),
a second stationary element (30) which is arranged adjacent to the second end (22) of the handle element (20),
wherein the stationary elements (24, 30) contact the handle element (20) on contacting faces (3, 4, 23, 25) during the movement of the handle element (20),
**characterized by** the following steps:
a) the handle element (20) and the stationary elements (24, 30) are produced from a first plastics material,
b) at least one contacting face (3, 4, 23, 25) is injection-moulded from a second plastics material - which has a lower strength than the first plastics material - onto a defined region of the handle unit (1), as a result of which noises which occur during the movement of the handle element are prevented.

15. A method according to Claim 14, **characterized in that** in accordance with step b)
(1) the first end (21) has the second plastics material injected completely around it,
(2) the second plastics material is injection-moulded onto the side of the second end (22) facing the first stationary element (30),
(3) the second plastics material is injection-moulded onto support regions (5) of the first stationary element (30).

16. A method according to one of the preceding Claims, **characterized in that** the second plastics material is injection-moulded onto the handle element (20) by a multiple-component injection-moulding method.

17. A method according to any one of Claims 14 to 16 for producing a handle unit (1) according to any one of claims 1 to 13.

## Revendications

1. Unité de poignée (1) pour un dispositif d'actionnement d'une porte de véhicule (2), d'une trappe ou d'un élément similaire, avec
un élément de poignée mobile (20), qui présente une première extrémité (21) et une seconde extrémité (22) qui peuvent être disposées du côté intérieur sur la porte de véhicule (2),
sachant que l'élément de poignée (20) est monté au niveau de la première extrémité (21) sur un premier élément fixe (24),
un second élément fixe (30), qui est disposé au voisinage de la seconde extrémité (22) de l'élément de poignée (20),
sachant que, pendant le déplacement de l'élément de poignée (20), les éléments fixes (24, 30) sont en contact avec l'élément de poignée (20) au niveau de surfaces de contact (3, 4, 23, 25),
**caractérisée en ce que** l'unité de poignée (1) présente une première matière plastique et est dotée d'au moins une surface de contact (3, 4, 23, 25) constituée d'une seconde matière plastique qui est moins résistante que la première matière plastique, sachant que cette surface de contact (3, 4, 23, 25) est assemblée d'un seul tenant à l'élément respectif (24, 20, 30) de l'unité de poignée (1) et joue le rôle de patin de glissement, ce qui permet de réduire considérablement la production de bruit.

2. Unité de poignée (1) selon la revendication 1, **caractérisée en ce que** la surface de contact (3, 4, 23, 25) est assemblée à l'unité de poignée (1) par un procédé de moulage par injection à plusieurs composants.

3. Unité de poignée (1) selon la revendication 1 ou 2, **caractérisée en ce que** la surface de contact (3) est disposée sur le côté de la seconde extrémité (22) de l'élément de poignée (20) qui est tourné vers l'élément fixe (30).

4. Unité de poignée (1) selon l'une des revendications précédentes, **caractérisée en ce que** la surface de contact (4) est disposée sur le côté de l'élément fixe (30) qui est tourné vers l'élément de poignée (20).

5. Unité de poignée (1) selon l'une des revendications précédentes, **caractérisée en ce que** la surface de contact (23) est disposée sur la première extrémité (21) de l'élément de poignée (20).

6. Unité de poignée (1) selon l'une des revendications précédentes, **caractérisée en ce que** la première et/ou la seconde matière plastique est un composite d'au moins deux matières plastiques individuelles.

7. Unité de poignée (1) selon l'une des revendications précédentes, **caractérisée en ce que** la première matière plastique présente des fibres de verre et/ou des fibres de carbone et/ou des fibres d'aramide, sachant notamment que la seconde matière plastique est un matériau constitué de polyméthylène oxyde, de PBT (téréphtalate de polybutylène), de polyamide, d'ABS (acrylonitrile-butadiène-styrène) ou de PBT/polycarbonate et/ou d'ABS/polycarbonate.

8. Unité de poignée (1) selon l'une des revendications précédentes, **caractérisée en ce que** la surface de contact (3, 4) est disposée à la manière d'une saillie sur l'élément respectif (20, 30).

9. Unité de poignée (1) selon l'une des revendications précédentes, **caractérisée en ce qu'**au moins deux surfaces de contact (3, 4) sont disposées sur la seconde extrémité (22) de l'élément de poignée (20) ainsi que sur l'élément fixe (30), sachant que les surfaces de contact (3, 4) de l'élément respectif (20, 30) sont mutuellement distantes.

10. Unité de poignée (1) selon l'une des revendications précédentes, **caractérisée en ce que** la première (21) et/ou la deuxième extrémités (22) sont totalement entourées par la seconde matière plastique.

11. Unité de poignée (1) selon l'une des revendications précédentes, **caractérisée en ce que** la surface de contact (3, 4, 23, 25) présente une face supérieure bombée.

12. Unité de poignée (1) selon l'une des revendications précédentes, **caractérisée en ce que** l'unité de poignée (1) présente une première région porteuse (5) sur laquelle la surface de contact (4) est moulée par injection.

13. Unité de poignée (1) selon l'une des revendications précédentes, **caractérisée en ce que** la région porteuse (5, 6) est formée par des nervures (5a) réalisées à la manière de saillies et/ou par des renfoncements (6a).

14. Procédé de fabrication d'une unité de poignée (1) pour un dispositif d'actionnement d'une porte de véhicule (2), d'une trappe ou d'un élément similaire, avec un élément de poignée mobile (20), qui présente une première extrémité (21) et une seconde extrémité (22) qui peuvent être disposées du côté intérieur sur la porte de véhicule (2),
sachant que l'élément de poignée (20) est monté au niveau de la première extrémité (21) sur un premier élément fixe (24),
un second élément fixe (30), qui est disposé au voisinage de la seconde extrémité (22) de l'élément de poignée (20),
sachant que, pendant le déplacement de l'élément de poignée (20), les éléments fixes (24, 30) sont en contact avec l'élément de poignée (20) au niveau de surfaces de contact (3, 4, 23, 25),
**caractérisé par** les étapes suivantes :
a) l'élément de poignée (20) et les éléments fixes (24, 30) sont fabriqués dans une première matière plastique,
b) au moins une surface de contact (3, 4, 23, 25) est moulée par injection, dans une seconde matière plastique qui est moins résistante que la première matière plastique, sur une région définie de l'unité de poignée (1), de sorte que les bruits qui surviennent pendant le déplacement de l'élément de poignée sont éliminés.

15. Procédé selon la revendication 14, **caractérisé en ce que**, selon l'étape b) :
(1) la première extrémité (21) est totalement enrobée par injection de la seconde matière plastique,
(2) la seconde matière plastique est moulée sur le côté de la seconde extrémité (22) qui est tourné vers le premier élément fixe (30),
(3) la seconde matière plastique est moulée sur des régions porteuses (5) du premier élément fixe (30).

16. Procédé selon l'une des revendications précédentes, **caractérisé en ce que** la seconde matière plastique est moulée sur l'unité de poignée (1) par un procédé de moulage par injection à plusieurs composants.

17. Procédé selon l'une des revendications 14 à 16 pour la fabrication d'une unité de poignée (1) selon l'une des revendications 1 à 13.
